# EUROPÄISCHE PATENTSCHRIFT

(11) **EP 2 456 338 B1**
(45) Veröffentlichungstag und Bekanntmachung des Hinweises auf die Patenterteilung: **10.09.2014**
(21) Anmeldenummer: 10735008.4
(22) Anmeldetag: 23.07.2010
(51) Int. Cl.: A47J 31/56

(54) **GETRÄNKEAUTOMAT**
BEVERAGE VENDING MACHINE
DISTRIBUTEUR AUTOMATIQUE DE BOISSONS

(30) Priorität: 23.07.2009 DE 102009034322
(43) Veröffentlichungstag der Anmeldung: 30.05.2012
(73) Patentinhaber: WMF Württembergische Metallwarenfabrik AG, 73309 Geislingen/Steige (DE)
(72) Erfinder: CASADO GOMEZ, Sebastian, 70329 Stuttgart (DE)
(74) Vertreter: BRP Renaud & Partner
(86) Internationale Anmeldenummer: PCT/EP2010/060708
(87) Internationale Veröffentlichungsnummer: WO 2011/009939

(56) Entgegenhaltungen:
- GB-A- 2 409 197
- US-A- 5 307 733
- US-A- 5 862 738
- US-B1- 6 491 427

## Beschreibung

Die vorliegende Erfindung betrifft einen Getränkeautomaten, insbesondere einen Kaffeevollautomaten, gemäß dem Oberbegriff des Anspruchs 1. Die Erfindung betrifft außerdem ein Verfahren zur Überführung eines Getränkeautomatens in einen Stand-by-Modus (Energiesparmodus).

Getränkeautomaten und insbesondere Kaffeevollautomaten sind heutzutage nicht nur im gewerblichen, sondern zunehmend auch im privaten Bereich verbreitet, wobei aufgrund der steigenden Energiekosten immer mehr das Thema Energieeffizienz bei derartigen Getränkeautomaten in den Vordergrund rückt. Ein geringer Energieverbrauch ist aufgrund der steigenden Energiekosten auch zunehmend ein Verkaufsargument. Generell hat sich dabei gezeigt, dass ein Energiebedarf zur Zubereitung eines Getränks aufgrund des dabei entstehenden hohen Energiebedarfs bei vielen Kaffeevollautomaten annähernd gleich ist, wobei jedoch in einem Stand-by-Modus ein deutlicher Unterschied besteht. Aus diesem Grund werden moderne Kaffeevollautomaten mit einem so genannten "ECO-Modus" ausgestaltet, bei welchem sich dieser Kaffeevollautomat bspw. nach einer vordefinierten und vorauswählbaren Zeit automatisch ausschaltet. Bekannt ist auch, dass der Kaffeevollautomat bei aktiviertem Energiesparmodus (ECO-Modus) nach einigen Minuten ohne Getränkebezug eine Kesseltemperatur auf einen vorher fest eingestellten Wert absenkt. Die Zeit bis zur Absenkung ist dabei jedoch stets gleich.

Die GB 2 409 19 7 A beschreibt einen Getränkeautomaten mit Energiesparmodus.

Die vorliegende Erfindung beschäftigt sich mit dem Problem, für einen gattungsgemäßen Getränkeautomaten eine verbesserte oder zumindest eine alternative Ausführungsform anzugeben, mit welcher einerseits ein Energieverbrauch in einem Stand-by-Modus gesenkt werden kann, andererseits jedoch trotzdem ein hoher Bedienkomfort zur Verfügung steht.

Dieses Problem wird erfindungsgemäß durch den Gegenstand des unabhängigen Anspruchs 1 gelöst. Vorteilhafte Ausführungsformen sind Gegenstand der abhängigen Ansprüche.

Die Erfindung beruht auf dem allgemeinen Gedanken, bei einem Getränkeautomaten, insbesondere bei einem Kaffeevollautomaten, Parameter für einen Energiesparmodus (Stand-by-Modus) nicht fix vorzugeben, sondern variierbar zu gestalten, so dass der Energiesparmodus anpassbar ist. Hierzu weist der erfindungsgemäße Getränkeautomat eine Steuerungs-/Regelungseinrichtung auf, welche einen Energieverbrauch in dem Stand-by-Modus, das heißt im Energiesparmodus, durch ein Absenken einer Kesseltemperatur, insbesondere einer Temperatur eines Wassererhitzers, beispielsweise eines Durchlauferhitzers oder eines Blankdraht-Heizsystems, verringert. Gemeint ist hierbei selbstverständlich die Bereitschaftstemperatur, in der der Wassererhitzer, bzw. das darin enthaltene Wasser, gehalten wird, wobei es auf die Art bzw. Ausführungsform des Wassererhitzers selbst nicht ankommt. Es ist somit unabhängig davon, ob dieser beispielsweise als Blankheizdraht, Durchlauferhitzer, Thermoblock, Kessel oder Boiler ausgebildet ist. Mit Kesseltemperatur ist demzufolge die Wassertemperatur gemeint, die im Kessel, Durchlauferhitzer, usw. herrscht. Gleichzeitig ist diese erfindungsgemäße Steuerungs-/Regelungseinrichtung derart ausgebildet, dass sie die Absenkung der Kesseltemperatur und/oder eine Wartezeit bis zum Beginn der Absenkung in Abhängigkeit einer in einem zeitlich davor liegenden Zeitraum erfolgten Getränkeausgabe steuert bzw. regelt. Die Zeit, nach welcher der erfindungsgemäße Getränkeautomat also in den Energiesparmodus wechselt, ist somit nicht starr vorgegeben, sondern abhängig von einem davor erfolgten Entnahmeverhalten, bspw. abhängig von einer zuvor erfolgten Anzahl an ausgegebenen Getränken bzw. einer zwischen den einzelnen Getränkeausgaben liegenden Zeitspanne. Gleichzeitig kann die erfindungsgemäße Steuerungs-/Regelungseinrichtung das Überführen des Getränkeautomatens in dessen Stand-by-Modus in Abhängigkeit der zuvor ausgewählten Getränkearten steuern bzw. regeln, so dass bspw. bei einer Kaltgetränkeausgabe früher in den Energiesparmodus gewechselt wird, als bei einer wiederkehrenden Ausgabe von Heißgetränken, wie bspw. Kaffee. Im letztgenannten Fall wird somit der Energiesparmodus später aktiviert, wodurch der Getränkeautomat jedoch auch schneller wieder einsatzbereit ist. Insbesondere kann mit dem erfindungsgemäßen Getränkeautomaten an Einsatzorten mit lediglich gelegentlichen Entnahmen und dazwischen liegenden langen Pausen ein erhöhter Bedienkomfort zur Verfügung gestellt werden, da, sofern zuvor Heißgetränke entnommen worden sind, der Getränkeautomat später in den Energiesparmodus überführt wird und somit eine Wartezeit bis zur vollen Einsatzbereitschaft des Getränkeautomatens bei einer zuvor erfolgten Heißgetränkeausgabe kürzer ist, als dies bspw. bei Getränkeautomaten der Fall ist, welche nach einer genau vorab definierten Zeitspanne in den Energiesparmodus wechselt. Darüber hinaus kann mit der erfindungsgemäßen Steuerungs-/Regelungseinrichtung eine Energiesparfunktion kontinuierlich an ein aktuelles Entnahmeverhalten angepasst und damit an jeweilige Betriebsbedingungen adaptiert werden. Die Realisierung der Erfindung ist darüber hinaus durch eine reine Änderung einer Software einer bereits bisher eingesetzten Steuerungs-/Regelungseinrichtung möglich, so dass ein monetärer Mehraufwand zur Realisierung der Erfindung vergleichsweise gering ist. Durch das automatische Anpassen des Überführens in den Stand-by-Modus reduziert sich auch ein oftmals als lästig empfundener Einstellaufwand für den Bediener, wodurch der Bedienkomfort gesteigert werden kann.

Bei einer vorteilhaften Weiterbildung der erfindungsgemäßen Lösung, weist der Getränkeautomat einen ECO-Modus und einen Dauerbereitschaftsmodus auf, wobei die Steuerungs-/Regelungseinrichtung einschließlich im ECO-Modus aktiv ist. Mit der Differenzierung dieser beiden Modi ist es somit dem Kunden bzw. dem Bediener des Getränkeautomatens überlassen, ob er eine Dauerbereitschaft des Getränkeautomatens oder aber eine Energiesparfunktion desselben bevorzugt.

Erfindungsgemäß ist die Steuerungs-/Regelungseinrichtung derart ausgebildet, dass sie die Temperatur des Wassererhitzers, das heißt der Kesseltemperatur, stufenweise absenkt. Denkbar ist somit, dass bei einem Überführen des Getränkeautomatens in dessen Energiesparmodus die Kesseltemperatur nicht auf einen Schlag, sondern vielmehr stufenweise und damit deutlich langsamer, abgesenkt wird, so dass eine ggf. gewünschte Wiederinbetriebnahme des Getränkeautomatens nach kurzer Zeit schneller möglich ist, wie dies bei einer nicht stufenweisen Absenkung der Temperatur des Wassererhitzers, das heißt der Kesseltemperatur möglich wäre.

Zweckmäßig erfolgt ein Mahl-, Press- und/oder Brühfunktionsvorgang bereits vor einem Erreichen einer Brühtemperatur, wodurch insbesondere eine schnellere Wiederinbetriebnahme erreicht werden kann. Bei einem in den Getränkeautomaten eingegebenen Getränkewunsch wird somit unmittelbar die Heizeinrichtung zum Aufheizen des für einen Brühvorgang erforderlichen Wassers aktiviert, wobei ein Mahlen des Kaffees, ein Pressen desselben oder ein Vorbrühen desselben bereits zeitlich vor Erreichen der Brühtemperatur im Kessel des Getränkeautomatens erfolgt, so dass hierdurch die Wartezeit zwischen der Eingabe des Getränkewunschs und der Ausgabe des eigentlichen Getränks verkürzt und dadurch der Kundennutzen gesteigert werden kann.

Bei einer weiteren vorteilhaften Ausführungsform der erfindungsgemäßen Lösung, weist der Getränkeautomat ein Display auf, auf welchem ein Absenkzustand der Temperatur des Wassererhitzers, das heißt der Kesseltemperatur angezeigt wird. Hierdurch ist es für einen Bediener des Getränkeautomatens zu allen Zeiten problemlos und einfach möglich, zu erkennen, in welchem Betriebs- oder Stand-by-Modus sich der Getränkeautomat aktuell befindet und wie lange er auf ein gewünschtes Getränk warten muss. Selbstverständlich kann hierzu ein bereits üblicherweise am Getränkeautomaten angeordnetes Display genutzt oder aber ein separates Display vorgesehen werden, was bspw. je nach gewünschter Ausstattungslinie entschieden werden kann.

Mit dem erfindungsgemäßen Getränkeautomaten, welcher seinen Energiesparmodus in Abhängigkeit einer Getränkeausgabe steuert bzw. regelt, kann somit ein besonders energiesparendes Gerät am Markt angeboten werden, welches zugleich besonders bedienfreundlich ist, da es an ein jeweiliges Entnahmeverhalten adaptierbar ist, insbesondere da sich der Getränkeautomat automatisch an das jeweils zuvor erfolgte Entnahmeverhalten anpasst. Hierdurch können auch insbesondere kürzere Wiederinbetriebnahmezeiten erreicht werden, was ebenfalls zu einem gesteigerten Kundennutzen beiträgt. Im Vergleich zu Getränkeautomaten, welche sich ständig im Betriebszustand befinden, kann mit dem erfindungsgemäßen Getränkeautomat auch eine deutliche Energieeinsparung erzielt werden, was im Hinblick auf die stetig steigenden Energiekosten ebenfalls von Vorteil ist.

## Patentansprüche

1. Getränkeautomat, insbesondere ein Kaffeevollautomat,
**dadurch gekennzeichnet,**
- **dass** eine Steuerungs-/Regelungseinrichtung vorgesehen ist, welche einen Energieverbrauch in einem Stand-by-Modus durch ein Absenken der Temperatur eines Wassererhitzers, insbesondere beispielsweise die Temperatur eines Kessels oder eines Durchlauferhitzers, verringert,
- **dass** die Steuerungs-/Regelungseinrichtung derart ausgebildet ist, dass sie die Absenkung der Temperatur des Wassererhitzers, insbesondere der Kesseltemperatur, und/oder eine Wartezeit bis zum Beginn der Absenkung in Abhängigkeit einer in einem zeitlich davor liegenden Zeitraum erfolgten Getränkeausgabe steuert/regelt,
- **dass** die Steuerungs-/Regelungseinrichtung derart ausgebildet ist, dass sie die Temperatur des Wassererhitzers, insbesondere die Kesseltemperatur stufenweise absenkt.

2. Getränkeautomat nach Anspruch 1,
**dadurch gekennzeichnet,**
**dass** die Steuerungs-/Regelungseinrichtung derart ausgebildet ist, dass sie die Absenkung der Temperatur des Wassererhitzers, insbesondere der Kesseltemperatur und/oder eine Wartezeit bis zum Beginn der Absenkung in Abhängigkeit einer ausgegebenen Getränkeart und/oder eines Ausgabezyklus steuert/regelt.

3. Getränkeautomat nach Anspruch 1 oder 2,
**dadurch gekennzeichnet,**
**dass** der Getränkeautomat einen ECO-Modus und einen Dauerbereitschaftsmodus aufweist, wobei die Steuerungs-/Regelungseinrichtung ausschließlich im ECO-Modus aktiv ist.

4. Getränkeautomat nach einem der Ansprüche 1 bis 3,
**dadurch gekennzeichnet,**
**dass** ein Mahl-, Press- und/oder Preinfusionsvorgang bereits vor einem Erreichen einer Brühtemperatur erfolgt, um hierdurch eine schnellere Wiederinbetriebnahme zu erreichen.

5. Getränkeautomat nach einem der Ansprüche 1 bis 4,
**dadurch gekennzeichnet,**
**dass** der Getränkeautomat ein Display aufweist, auf welchem ein Absenkzustand der Kesseltemperatur anzeigbar ist.

6. Verfahren zur Überführung eines Getränkeautomats, insbesondere eines Kaffeevollautomats, in einen Stand-by-Modus, bei dem
- eine Steuerungs-/Regelungseinrichtung einen Energieverbrauch in einem Stand-by-modus durch ein Absenken einer Temperatur eines Wassererhitzers, insbesondere einer Kesseltemperatur, verringert,
- die Steuerungs-/Regelungseinrichtung die Absenkung der Temperatur des Wassererhitzers, insbesondere der Kesseltemperatur und/oder eine Wartezeit bis zum Beginn der Absenkung in Abhängigkeit einer in einem zeitlich davor liegenden Zeitraum erfolgten Getränkeausgabe steuert/regelt,
- dass die Steuerungs-/Regelungseinrichtung die Temperatur des Wassererhitzers, insbesondere die Kesseltemperatur stufenweise absenkt.

## Claims

1. A beverage machine, in particular a fully-automatic coffee machine, **characterized in**
- **that** provision is made for a control/regulating device, which reduces an energy consumption in a stand-by mode by lowering the temperature of a water heater, in particular for example the temperature of a boiler or of a continuous-flow water heater,
- **that** the control/regulating device is embodied such that it controls/regulates the lowering of the temperature of the water heater, in particular of the boiler temperature and/or a waiting time until the onset of the lowering as a function of a beverage dispensing, which took place in a preceding time period,
- **that** the control/regulating device is embodied such that it gradually lowers the temperature of the water heater, in particular the boiler temperature.

2. The beverage machine according to claim 1,
**characterized in**
**that** the control/regulating device is embodied such that it controls/regulates the lowering of the temperature of the water heater, in particular of the boiler temperature and/or a waiting time until the onset of the lowering as a function of a dispensed beverage type and/or of a dispensing cycle.

3. The beverage machine according to claim 1 or 2,
**characterized in**
**that** the beverage machine encompasses an ECO mode and a continuous readiness, wherein the control/regulating device is only active in the ECO mode.

4. The beverage machine according to one of claims 1 to 3,
**characterized in**
**that** a grinding, pressing and/or pre-infusion process already takes place prior to reaching a brewing temperature so as to thus attain a faster restart.

5. The beverage machine according to one of claims 1 to 4,
**characterized in**
**that** the beverage machine encompasses a display, on which a lowering state of the boiler temperature can be displayed.

6. A method for transferring a beverage machine, in particular a fully-automatic coffee machine, into a stand-by mode, in which
- a control/regulating device reduces an energy consumption in a stand-by mode by lowering a temperature of a water heater, in particular of a boiler temperature,
- the control/regulating device controls/regulates the lowering of the temperature of the water heater, in particular of the boiler temperature and/or a waiting time until the onset of the lowering as a function of a beverage dispensing, which took place in a preceding time period,
- that the control/regulating device gradually lowers the temperature of the water heater, in particular the boiler temperature.

## Revendications

1. Distributeur de boissons, notamment un distributeur de café entièrement automatique, **caractérisé**
- **en ce qu'**il est prévu un système de commande/de régulation, lequel diminue une consommation d'énergie dans un mode veille par un abaissement de la température d'un réchauffeur d'eau, notamment par exemple la température d'une cuve ou d'un réchauffeur d'eau permanent,
- **en ce que** le système de commande/de régulation est conçu de telle sorte qu'il commande/régule l'abaissement de la température du réchauffeur d'eau, notamment la température de la cuve et/ou un temps d'attente jusqu'au début de la l'abaissement en fonction d'une distribution de boisson qui a eu lieu pendant une période précédente dans le temps,
- **en ce que** le système de commande/de régulation est conçu de telle sorte qu'il abaisse progressivement la température du réchauffeur d'eau, notamment la température de la cuve.

2. Distributeur de boissons selon la revendication 1,
**caractérisé**
**en ce que** le système de commande/de régulation est conçu de telle sorte qu'il commande/régule l'abaissement de la température du réchauffeur d'eau, notamment de la température de la cuve et/ou un temps d'attente jusqu'au début de l'abaissement en fonction d'un type de boisson distribué et/ou d'un cycle de distribution.

3. Distributeur de boissons selon la revendication 1 ou 2,
**caractérisé**
**en ce que** le distributeur de boissons comporte un mode ECO et un mode de disponibilité continue, le système de commande/de régulation étant uniquement actif en mode ECO.

4. Distributeur de boissons selon l'une quelconque des revendications 1 à 3,
**caractérisé**
**en ce qu'**une opération de mouture, de pressage et/ou de pré-infusion s'effectue déjà avant une atteinte d'une température d'infusion, pour obtenir de ce fait une remise en service plus rapide.

5. Distributeur de boissons selon l'une quelconque des revendications 1 à 4,
**caractérisé**
**en ce que** le distributeur de boissons comporte un écran sur lequel peut s'afficher un état d'abaissement de la température de la cuve.

6. Procédé destiné à transférer un distributeur de boissons, notamment un distributeur entièrement automatique de café dans un mode veille, lors duquel
- un système de commande/de régulation diminue une consommation d'énergie dans un mode veille par un abaissement d'une température d'un réchauffeur d'eau, notamment d'une température de la cuve,
- le système de commande/de régulation commande/régule l'abaissement de la température d'un réchauffeur d'eau, notamment de la température de la cuve et/ou un temps d'attente jusqu'au début de l'abaissement en fonction d'une distribution de boisson qui a eu lieu pendant une période précédente dans le temps,
- le système de commande/de régulation est conçu de telle sorte qu'il abaisse progressivement la température du réchauffeur d'eau, notamment la température de la cuve.
